# EUROPEAN PATENT APPLICATION

(11) **EP 3 998 158 A1**
(43) Date of publication of application: **18.05.2022**
(21) Application number: 20837904.0
(22) Date of filing: 20.05.2020
(51) Int. Cl.: B32B 27/00, B32B 27/32, B65D 65/40

(54) **TITLE OF THE INVENTION BIAXIALLY ORIENTED POLYPROPYLENE-BASED RESIN FILM AND PACKAGE USING SAME**

(30) Priority: 10.07.2019 JP 2019128449; 31.10.2019 JP 2019199029
(71) Applicant: Toyobo Co., Ltd., Osaka-shi Osaka 530-8230 (JP)
(72) Inventor: KIRIYAMA, Kazuya, Inuyama-shi, Aichi 484-8508 (JP); IMAI, Toru, Inuyama-shi, Aichi 484-8508 (JP)
(74) Representative: Vossius & Partner Patentanwälte Rechtsanwälte mbB
(86) International application number: PCT/JP2020/020008
(87) International publication number: WO 2021/005893

(57) **Abstract**

Disclosed is a biaxially oriented polypropylene-based resin film having stiffness and superior in both melt cut sealing and heat sealing properties. The biaxially oriented polypropylene-based resin film having a base layer (A) consisting of a polypropylene-based resin composition and surface layers (B) consisting of a polypropylene-based resin composition on both sides of the base layer (A), and the biaxially oriented polypropylene-based resin film satisfying the following a) to d): a) a mesopentad fraction of the whole polypropylene-based resin composition constituting the base layer (A) of 95.0 to 99.5%; b) a ratio of an α-olefin monomer-derived component to a total of a propylene monomer-derived component and the α-olefin monomer-derived component in the whole polypropylene-based resin composition constituting the base layer (A) of 0.2% by mole or less; c) a ratio of a butene-1 monomer-derived component to a total of a propylene monomer-derived component and an α-olefin monomer-derived component in the polypropylene-based resin composition constituting the surface layers (B) of 5 to 10% by mole; and d) a thickness of the biaxially oriented polypropylene-based resin film of 60 µm or less, and a ratio of a thickness of the surface layers (B) to the total layer thickness of the biaxially oriented polypropylene-based resin film of 3 to 10%.

## Description

### TECHNICAL FIELD

The present invention relates to a polypropylene-based laminate film suitable for packaging sandwiches and the like by being configured in such a way that the shape of contents can be easily kept and contents can be easily discerned, and specifically, the present invention relates to a polypropylene-based laminate film having high stiffness and being capable of melt cut sealing and heat sealing.

### BACKGROUND ART

Conventionally, films made of polypropylene have been used for packaging various commercial products including foods, and the polypropylene films have been considered preferable to have small water vapor permeability and small oxygen permeability, and considered preferable to be capable of both melt cut sealing process and heat sealing process as a sealing process with heat to produce a bag so that various users can use them.

Furthermore, films used for packaging foods such as sandwiches are required to have heat sealing properties and tight sealing properties by which a bag can be produced such that the shape of the bag conforms to the shape of the foods, high visibility of contents, printability, and in addition, the shape of the package is required not to be liable to change.

However, conventional polypropylene-based films being capable of melt cut sealing and heat sealing had room for improvement in mechanical properties (For example, see patent document 1).

### RELATED ART DOCUMENT

### PATENT DOCUMENT

Patent document 1: WO2017/170330

### SUMMARY OF THE INVENTION

### PROBLEMS TO BE SOLVED BY THE INVENTION

The present invention has been made considering the above technical background. The objective of the present invention is to provide a biaxially oriented polypropylene-based resin film having high stiffness, and superior in both melt cut sealing properties and heat seal properties.

### MEANS FOR SOLVING THE PROBLEMS

The present invention is as follows:
[1] A biaxially oriented polypropylene-based resin film, comprising: a base layer (A) consisting of a polypropylene-based resin composition; and surface layers (B) consisting of a polypropylene-based resin composition on both sides of the base layer (A), the biaxially oriented polypropylene-based resin film satisfying the following a) to d):
   a) a mesopentad fraction of the whole polypropylene-based resin composition constituting the base layer (A) of 95.0% or more and 99.5% or less;
   b) a ratio of an α-olefin monomer-derived component to a total of a propylene monomer-derived component and the α-olefin monomer-derived component in the whole polypropylene-based resin composition constituting the base layer (A) of 0.2% by mole or less;
   c) a ratio of a butene-1 monomer-derived component to a total of a propylene monomer-derived component and an α-olefin monomer-derived component in the polypropylene-based resin composition constituting the surface layers (B) of 5% by mole or more and 10% by mole or less; and
   d) a thickness of the biaxially oriented polypropylene-based resin film of 60 µm or less, and a ratio of a thickness of the surface layers (B) to the total layer thickness of the biaxially oriented polypropylene-based resin film of 3% or more and 10% or less.
[2] A biaxially oriented polypropylene-based resin film, comprising: a base layer (A) consisting of a polypropylene-based resin composition; and surface layers (B) consisting of a polypropylene-based resin composition on both sides of the base layer (A), the biaxially oriented polypropylene-based resin film satisfying the following A) to D):
   A) a melting point peak temperature of a polypropylene-based resin having the lowest DSC melting point in the polypropylene-based resin composition constituting the base layer (A) of 160°C or higher;
   B) a ratio of an α-olefin monomer-derived component to a total of a propylene-monomer-derived component and the α-olefin monomer-derived component in the whole polypropylene-based resin composition constituting the base layer (A) of 0.2% by mole or less;
   C) a ratio of a butene-1 monomer-derived component to a total of a propylene monomer-derived component and an α-olefin monomer-derived component in the polypropylene-based resin composition constituting the surface layers (B) of 5% by mole or more and 10% by mole or less; and
   D) a thickness of the biaxially oriented polypropylene-based resin film of 60 µm or less, and a ratio of a thickness of the surface layers (B) to the total layer thickness of the biaxially oriented polypropylene-based resin film of 3% or more and 10% or less.
[3] The biaxially oriented polypropylene-based resin film according to [1] or [2], wherein a melt flow rate (MFR) of the whole polypropylene-based resin composition constituting the base layer (A) is 2.0 g/10min or more and 4.5 g/10min or less.
[4] The biaxially oriented polypropylene-based resin film according to any one of [1] to [3], wherein the polypropylene-based resin composition constituting the base layer (A) includes two or more polypropylene homopolymers; a polypropylene homopolymer having the highest mesopentad fraction among the polypropylene homopolymers has a mesopentad fraction of 97.5% or more; and a polypropylene homopolymer having the lowest mesopentad fraction among the polypropylene homopolymers has a mesopentad fraction of 96.5% or less.
[5] The biaxially oriented polypropylene-based resin film according to any one of [1] to [4], wherein the polypropylene-based resin composition constituting the base layer (A) includes at least one kind of polymer selected from the group consisting of propylene homopolymer, propylene-ethylene copolymer, propylene-butene-1 copolymer, propylene-ethylene-butene-1 copolymer, and propylene-pentene-1 copolymer.
[6] The biaxially oriented polypropylene-based resin film according to any one of [1] to [5], having a Young's modulus in a longitudinal direction of 2.0 GPa or more, and a Young's modulus in a width direction of 4.0 GPa or more.
[7] The biaxially oriented polypropylene-based resin film according to any one of [1] to [6], having a melt cut seal strength of 18 N/15mm or more.
[8] The biaxially oriented polypropylene-based resin film according to any one of [1] to [7], having a heat seal attainable strength of 3 N/15mm or more.
[9] A package comprising the biaxially oriented polypropylene-based resin film according to any one of [1] to [8].

### EFFECTS OF THE INVENTION

The biaxially oriented polypropylene-based resin film having high stiffness and being superior in both melt cut sealing properties and heat sealing properties is superior in visibility when the film is used for packaging commercial products such as sandwiches, allows the shape of the package to be unlikely to deform, allows contents to look fine, and further leads to contribution to environmental problem by reducing film thickness.

### MODE FOR CARRYING OUT THE INVENTION

A biaxially oriented polypropylene-based resin film of the present invention has a base layer (A) consisting of a polypropylene-based resin composition, and surface layers (B) consisting of a polypropylene-based resin composition on both sides of the base layer (A).

### (Base layer (A))

In the present invention, the base layer (A) consists of a polypropylene-based resin composition, and preferably at least one polymer selected from the group consisting of propylene homopolymer, and copolymer of propylene including 90% by mole or more propylene and other α-olefin. A content of the at least one polymer selected from the group consisting of propylene homopolymer, and copolymer of propylene including 90% by mole or more propylene and other α-olefin is preferably 95% by weight or more, more preferably 97% by weight or more, even more preferably 98% by weight or more, and particularly preferably 99% by weight or more.

The propylene homopolymer is preferably isotactic propylene homopolymer insoluble in n-heptane.

Insolubility in n-heptane is a measure for both crystallizability of polypropylene and safety as a package for foods, and it is a preferable embodiment in the present invention that propylene homopolymer having n-heptane insolubility in conformity with Public Notice of the Ministry of Health No. 20 of February, 1982 (an elution amount is 150 ppm or less when extracted at 25°C for 60 minutes [30 ppm or less in the case of operating temperatures of 100°C or higher]) is used.

The other α-olefin is preferably α-olefin having 2 to 8 of carbon atoms such as ethylene, butene-1, pentene-1, hexene-1, and 4-methyl-1-pentene. The copolymer is preferably random or block copolymer obtained by copolymerizing propylene and one or two or more kinds of the above exemplified α-olefin, and preferably propylene-ethylene copolymer, propylene-butene-1 copolymer, propylene-ethylene-butene-1 copolymer, or propylene-pentene-1 copolymer.

The polypropylene homopolymer is preferably contained at 97% by weight or more with respect to the polypropylene-based resin composition constituting the base layer (A), more preferably 98% by weight or more, even more preferably 99% by weight or more, and particularly preferably 100% by weight.

In the case where propylene-α-olefin copolymer including 90% by mole or more of propylene is mixed to be used, the content of the propylene-α-olefin copolymer including 90% by mole or more of propylene is preferably 3% by weight or less with respect to the total polypropylene-based resin composition used for the base layer (A), more preferably 2% by weight or less, even more preferably 1% by weight or less, and particularly preferably 0% by weight.

A melting point peak temperature of a polypropylene-based resin having the lowest DSC melting point in the polypropylene-based resin composition constituting the base layer (A) is preferably 160°C or higher.

The melting point is measured in the manner explained in the examples described later. When the polypropylene-based resin having the lowest DSC melting point has a melting point peak temperature of 160°C or higher, the shape of a package is less likely to deform, and the melting point peak temperature of 160°C or higher can make the film run more smoothly when the film is subjected to a high-speed packaging process, and can make an obtained bag have fewer wrinkles.

Alternatively, from the viewpoint of melt cut sealing properties, a ratio of an α-olefin monomer-derived component to a total of a propylene monomer-derived component and the α-olefin monomer-derived component in the whole polypropylene-based resin composition used for the base layer (A) is preferably 0.2% by mole or less. Thereby, high level in both stiffness and melt cut sealing properties can be achieved. The ratio is more preferably 0.1% by mole or less, even more preferably 0.05% by mole or less, and particularly preferably 0% by mole.

From the viewpoint of stiffness, an isotactic mesopentad fraction of the whole polypropylene-based resin composition constituting the base layer (A) is preferably 95% or more. Thereby, high level in both stiffness and melt cut sealing properties can be achieved. The mesopentad fraction is more preferably 97.0% or more. Moreover, from the viewpoint of film forming, the mesopentad fraction is preferably 99.5% or less.

In addition, from the viewpoint of melt cut sealing properties, a melt flow rate (MFR) of the polypropylene-based resin composition used for the base layer (A) is preferably 2.0 g/10min or more. Thereby, high level in both stiffness and melt cut sealing properties can be achieved. From the viewpoint of degree of film elongation, the melt flow rate (MFR) is preferably 6.0 g/10min or less.

The polypropylene-based resin composition constituting the base layer (A) may include two or more polypropylene homopolymers.

In this case, a polypropylene homopolymer having the highest mesopentad fraction among the polypropylene homopolymers preferably has a mesopentad fraction of 97.5% or more, more preferably 98.0% or more, and particularly preferably 98.5% or more. The ratio of the polypropylene homopolymer having a mesopentad fraction of 97.5% or more is preferably 30% by weight or more and 70% by weight or less, and more preferably 40% by weight or more and 60% by weight or less.

In this case, a polypropylene homopolymer having the lowest mesopentad fraction among the polypropylene homopolymers preferably has a mesopentad fraction of 96.5% or less, more preferably 95.5% or less, and particularly preferably 95.0% or less.

The ratio of the polypropylene homopolymer having a mesopentad fraction of 96.5% or less is preferably 30% by weight or more and 70% by weight or less, and more preferably 40% by weight or more and 60% by weight or less.

While the thickness of the base layer (A) depends on the purpose or usage, from the viewpoint of film stiffness and water vapor permeability, the thickness is preferably 10 µm or more, more preferably 15 µm or more, and even more preferably 20 µm or more. From the viewpoint of transparency and environmental impact, the thickness is preferably 50 µm or less, more preferably 45 µm or less, even more preferably 40 µm or less, and particularly preferably 37 µm or less.

The polypropylene-based resin composition constituting the base layer (A) and/or the surface layer (B) may include an anti-fogging agent. The anti-fogging agent included in the polypropylene-based resin composition constituting the base layer (A) of the biaxially oriented polypropylene-based resin film of the present invention can be exemplified by fatty acid esters of polyol, amines of higher fatty acid, amides of higher fatty acid, and ethylene oxide additive of amines or amides of higher fatty acid. A content of the anti-fogging agent in the film with respect to the total layers is preferably 0.1 to 10% by weight, and particularly preferably 0.2 to 5% by weight.

Development mechanism of anti-fog effect is explained as follows: by adding an anti-fogging agent in the resin constituting the base layer (A), the anti-fogging agent gradually migrates to the surface layer (B) while the film is produced or stored; thereby the film surface becomes to have anti-fog effect. The effect can be exerted when it is greengrocery characteristic for its maintained physiological action even after being harvested that the film packages.

In addition, in order to keep improved anti-fog effect on a long-term basis during distribution process, since it is preferred that a package is stored at a room temperature rather than at a temperature for frozen storage, an anti-fogging agent is preferably selected in such a way that the anti-fogging agent exhibits continuous anti-fog effect during repeated changes in temperature in the range of 5 to 30°C, considering changes in temperature during the distribution process.

Furthermore, in a range not undermining the effect of the present invention, the polypropylene-based resin composition constituting the base layer (A) may also include various additives for improvement in quality such as slipperiness and anti-static properties, for example, wax for improvement in productivity, lubricant such as metal soap, plasticizer, process aids, and generally known heat stabilizer, antioxidant, antistatic agent, and ultraviolet absorber that are usually added to polypropylene-based films.

### (Surface layer (B))

Polypropylene-based resin used for a polypropylene-based resin composition constituting the surface layer (B) preferably includes propylene-α-olefin copolymer including at least butene-1.

By using the propylene-α-olefin copolymer including at least butene-a, the melting point of the propylene-α-olefin copolymer can be lowered even with a relatively low ratio of copolymer component, and thereby, components of the surface layer (B) can be easily mixed to achieve high heat seal attainable strength. In addition, even with a thinner thickness of the surface layer (B), enough heat seal attainable strength can be easily obtained.

Other α-olefin than butene-1 is preferably α-olefins having 2 to 8 of carbon atoms such as ethylene, pentene-1, hexene-1, 4-methyl-1-pentene. The propylene-α-olefin copolymer including at least butene-1 is preferably random or block copolymer obtained by polymerizing propylene with one kind or two or more kinds of α-olefin including at least butene-1, and preferably at least one kind of copolymer selected from the group consisting of propylene-butene-1 copolymer and propylene-ethylene-butene-1 copolymer.

The polypropylene-based resin composition constituting the surface layer (B) may include propylene homopolymer or copolymer of propylene including 90% by mole or more propylene and other α-olefin than butene-1, however, the polypropylene-based resin composition constituting the surface layer (B) preferably include such copolymer at 10% by weight or less, more preferably 5% by weight or less, even more preferably 3% by weight or less, and particularly preferably 0% by weight.

The polypropylene-based resin composition constituting the surface layer (B) preferably has a content of propylene-butene-1 copolymer of 20% by weight to 50% by weight, and more preferably 25% by weight to 50% by weight. As other propylene-α-olefin copolymer, propylene-ethylene-butene-1 copolymer is preferably included, and its content in the polypropylene-based resin composition constituting the surface layer is preferably 50 to 80% by weight, and more preferably 50 to 75% by weight.

From the viewpoint of achieving high melt cut seal strength, the polypropylene-based resin composition constituting the surface layer (B) preferably has a ratio of a butene-1 monomer-derived component to a total of a propylene monomer-derived component and an α-olefin monomer-derived component of 5% by mole or more, more preferably 5.5% by mole or more, and even more preferably 5.7% by mole or more.

A ratio of the butene-1 monomer-derived component to the total of the propylene monomer-derived component and the α-olefin monomer-derived component of 5% by mole or more can prevent spherocrystals from growing.

It is because of the following reason: while at a time when stretching the base layer (A) constituted by the polypropylene-based resin composition having high melting point, a stretching temperature needs to be increased, slow cooling of the film that has been stretched at an increased temperature (for example, when the film travels out from a tenter stretching machine) makes it easier for spherocrystals in the polypropylene-based resin composition constituting the surface layer (B) to grow and lead to generating larger spherocrystals; the spherocrystals existing at a melted part after melt cut sealing may leads to generation of interfaces, and is likely to cause decreased melt cut seal strength; it has been found that the higher the melting point of the polypropylene-based resin composition constituting the base layer (A) is, the more prominent the tendency of the above phenomenon is, because the film is stretched at a higher temperature.

However, since a large amount of butene-1 monomer-derived component may lead to an uneven shape of a sealed part, the polypropylene-based resin composition constituting the surface layer (B) has a ratio of the butene-1 monomer-derived component to the total of the propylene monomer-derived component, the ethylene monomer-derived component, and the butene-1 monomer-derived component of 10% by mole or less, more preferably 9.5% by mole or less, even more preferably 9% by mole or less, particularly preferably 8% by mole or less and most preferably 6.5% by mole or less.

When the polypropylene-based resin composition constituting the surface layer (B) is at least one kind of copolymer selected from the group consisting of propylene-butene-1 copolymer, and propylene-ethylene-butene-1 copolymer, from the viewpoint of achieving high melt cut seal strength, a ratio of the butene-1 monomer-derived component to the total of the propylene monomer-derived component, the ethylene monomer-derived component, and the butene-1 monomer derived component is preferably 5% by mole or more, more preferably 5.5% by mole or more, and even more preferably 5.7% by mole or more.

However, since a large amount of butene-1 monomer derived component may lead to an uneven shape of a sealed part, the polypropylene-based resin composition constituting the surface layer (B) has a ratio of the butene-a monomer-derived component to the total of the propylene monomer-derived component, the ethylene monomer-derived component, and the butene-1 monomer-derived component of 10% by mole or less, more preferably 9.5% by mole or less, even more preferably 9% by mole or less, particularly preferably 8% by mole or less and most preferably 6.5% by mole or less.

In addition, a greater ratio of the α-olefin monomer-derived component to the total of the propylene monomer-derived component and the α-olefin monomer-derived component in the whole polypropylene-based resin composition constituting the surface layer (B) is likely to lead to interfacial peeling between the base layer (A) and the surface layer (B).

Therefore, the ratio of the α-olefin monomer-derived component in the polypropylene-based resin used for the polypropylene-based rein composition constituting the surface layer (B) is preferably 20% by mole or less.

As the polypropylene-based resin composition constituting the surface layer (B), one or more propylene-α-olefin copolymers may be used, and a melting peak temperature of a propylene-α-olefin copolymer having the lowest DSC melting point among the polypropylene-α-olefin copolymers is preferably 100°C or higher. Thereby, spherocrystals are less likely to exist at a melted part after melt cut sealing, and melt cut seal strength is less likely to decrease.

A ratio of a thickness of the surface layer (B) to the total layer thickness of the biaxially oriented polypropylene-based resin film is preferably 10% or less from the viewpoint of melt cut seal strength, more preferably 9.5% or less, even more preferably 8% or less, and particularly preferably 6% or less. A thickness of the surface layer (B) of 10% or less leads to smaller number of spherocrystals at a melted part, which is called "poly pool", of a melt cut sealed part, and also leads to a lower ratio of resin having lower melting point, and thereby melt cut seal strength is less likely to decrease.

From the viewpoint of heat sealing, the ratio of the thickness of the surface layer (B) is preferably 3% or more, more preferably 4% or more, even more preferably 4.5% or more, and particularly preferably 5% or more.

Furthermore, in a range not undermining the effect of the present invention, the surface layer (B) may also include various additives for improvement in quality such as slipperiness and anti-static properties, for example, wax for improvement in productivity, lubricant such as metal soap, plasticizer, process aids, and generally known heat stabilizer, antioxidant, antistatic agent, and ultraviolet absorber that are usually added to polypropylene-based films. In addition, in order to secure anti-blocking properties and slipperiness, inorganic or organic fine particles can be also included.

The inorganic fine particles can be exemplified by silicon dioxide, calcium carbonate, titanium dioxide, talc, kaolin, mica, and zeolite. Any shapes are available for them including spherical shape, elliptical shape, circular cone shape, and indefinite shape, and a diameter of the particles also may be appropriately selected and used in accordance with purpose and usage of the film.

The organic fine particles may be cross-link particles such as acrylic, methyl acrylate, styrene-butadiene, shapes and size of which are not limited and can be appropriately selected similarly as the inorganic fine particles. Furthermore, a large variety of surface treatments can be performed to surfaces of these inorganic or organic fine particles, and these particles can be used alone or two or more kinds of the particles can be used in combination. This is also applied to the surface layer (B) described later.

### (Total layer thickness of the film)

While a total layer thickness of the biaxially oriented polypropylene-based resin film of the present invention depends on the purpose or usage, from the viewpoint of film strength, tight sealing properties, or water vapor barrier properties, the thickness is preferably 10 µm or more, more preferably 15 µm or more, and even more preferably 20 µm or more.

From the viewpoint of high-speed packaging processability or visibility, the thickness is preferably 60 µm or less, more preferably 50 µm or less, particularly preferably 45 µm or less, and most preferably 40 µm or less.

### (Process for producing the biaxially oriented polypropylene-based resin film)

The biaxially oriented polypropylene-based resin film of the present invention can be produced by a process under the same condition as the one used for a general polyolefin film, and exemplified by a process including melt lamination by a T-die method or a inflation method using extruders corresponding to the number of layers to be laminated, followed by cooling by a cooling roll method, a water cooling method, or an air cooling method to produce a laminated film, and stretching the film by a sequential biaxial stretching process, a simultaneous biaxial stretching process, or a tube stretching process.

The conditions of a process including the sequential biaxial stretching can be exemplified as follows: resin is melt extruded from a T-die, which is cooled and solidified with a casting machine to produce a master sheet; in this case, a roll temperature of melt casting is preferably set at 15 to 40°C in order to prevent the resin from crystallizing to improve transparency.

Next, the master sheet is heated to a temperature suitable for stretching, and the sheet is stretched in the direction along which the sheet travels using the difference in speed between stretching rolls. At this time, the stretch ratio is preferably set to be 3 to 6 times from the viewpoint of stable production without unevenness of stretching.

Subsequently, the longitudinally stretched sheet is gripped with tenter clips at both ends, and gradually stretched in the direction perpendicular to the direction along which the sheet travels while being heated by hot air to a temperature suitable for stretching. At this time, the stretch ratio in the transverse direction is preferably set to be 7 to 10 times from a viewpoint of variation in thickness and productivity.

Subsequently, the transversely stretched film is preferably heat treated at 160 to 170°C while being gripped with the tenter clips at both ends. The time of the heat treatment is preferably set to be 2 to 10 seconds. In addition, the film is preferably relaxed at the range of 1 to 10 % in the width direction while being gripped with the tenter clips at both ends.

Next, corona discharge treatment is preferably performed to the surface of the surface layer (B) to improve surface tension of the surface of the surface layer (B). Thereby, anti-fog effect can be improved.

In order to improve printability and laminate properties of the biaxially oriented polypropylene-based resin film of the present invention, the base layer (A) is preferably surface treated. Processes for the surface treatment can be exemplified by corona discharge treatment, plasma treatment, flame treatment, and acid treatment. They can be performed serially, and the corona discharge treatment, the plasma treatment, and the flame treatment, which can be easily performed before a wound-up process in the film producing process, are preferable.

### (Film properties)

The biaxially oriented polypropylene-based resin film of the present invention preferably has the following properties. Note that a longitudinal direction mentioned here means a direction along which a film travels during the process from casting of raw resin composition to winding up a stretched film, and a width direction means a direction perpendicular to the direction along which a film travels. This is similarly applied to the following description of the properties.

### (Young's modulus)

The biaxially oriented polypropylene-based resin film of the present invention preferably has a Young's modulus in the longitudinal direction obtained by the measurement method described later of 2.0 MPa or more, and more preferably 2.2 MPa or more.

The biaxially oriented polypropylene-based resin film of the present invention preferably has a Young's modulus in the width direction obtained by the measurement method described later of 4.0 MPa or more, and more preferably 4.5 MPa or more.

### (5% elongation stress)

The biaxially oriented polypropylene-based resin film of the present invention preferably has a 5% elongation stress in the longitudinal direction obtained by the measurement method described later of 40 MPa or more, and more preferably 42 MPa or more.

The biaxially oriented polypropylene-based resin film of the present invention preferably has a 5% elongation stress in the width direction obtained by the measurement method described later of 110 MPa or more, and more preferably 110 MPa or more.

### (Strength at break)

The biaxially oriented polypropylene-based resin film of the present invention preferably has a strength at break in the longitudinal direction obtained by the measurement method described later of 125 MPa or more, more preferably 130 MPa or more, and even more preferably 140 MPa or more.

The biaxially oriented polypropylene-based resin film of the present invention preferably has a strength at break in the width direction obtained by the measurement method described later of 330 MPa or more, more preferably 350 MPa or more, even more preferably 360 MPa or more, and particularly preferably 370 MPa or more.

### (Elongation at break)

The biaxially oriented polypropylene-based resin film of the present invention preferably has an elongation at break in the longitudinal direction obtained by the measurement method described later of 200% or more, more preferably 220% or more, and even more preferably 240% or more.

The biaxially oriented polypropylene-based resin film of the present invention preferably has an elongation at break in the width direction obtained by the measurement method described later of 40% or more, and more preferably 45% or more.

### (Heat shrinkage ratio)

The biaxially oriented polypropylene-based resin film of the present invention preferably has a heat shrinkage ratio in the longitudinal direction obtained by the measurement method described later of 3% or less, and more preferably 2.5% or less.

The biaxially oriented polypropylene-based resin film of the present invention preferably has a heat shrinkage ratio in the width direction obtained by the measurement method described later of 2.5% or less, more preferably 2.0% or less, even more preferably 1.5% or less, and particularly preferably 1.0% or less.

### (Haze)

The biaxially oriented polypropylene-based resin film of the present invention preferably has a haze obtained by the measurement method describe later of 10% or less, and more preferably 7% or less.

### (Gloss)

The biaxially oriented polypropylene-based resin film of the present invention preferably has a gloss in both the longitudinal direction and the width direction obtained by the measurement method described later of 150° or less, and more preferably 140° or less.

### (Kinetic friction coefficient)

The biaxially oriented polypropylene-based resin film of the present invention preferably has a kinetic friction coefficient in both the longitudinal direction and the width direction obtained by the measurement method described later of 0.4 or less, and more preferably 0.3 or less.

### (Wet tension)

The biaxially oriented polypropylene-based resin film of the present invention preferably has a wet tension obtained by the measurement method described later of 30 mN/m or more, and more preferably 35 mN/m or more.

### (Surface specific resistivity)

The biaxially oriented polypropylene-based resin film of the present invention preferably has a surface resistivity in the longitudinal direction obtained by the measurement method described later of 15 LogQ or less, and more preferably 13 LogQ or less.

The biaxially oriented polypropylene-based resin film of the present invention preferably has a surface resistivity in the width direction obtained by the measurement method described later of 15 LogQ or less, and more preferably 13 LogQ or less.

### (Water vapor permeability)

The biaxially oriented polypropylene-based resin film of the present invention preferably has a water vapor permeability obtained by the measurement method described later of 7.0 (g/(m²•d)) or less, more preferably 6.0 (g/(m²•d)) or less, and even more preferably 4.5 (g/(m²•d)) or less.

### (Onset temperature of heat sealing)

The surface layer (B) of the biaxially oriented polypropylene-based resin film of the present invention preferably has an onset temperature of heat sealing of 125°C or lower. When the onset temperature of heat sealing is 125°C or lower, heat sealing having sufficient strength is available even with a lower heat seal temperature, which enables high-speed operation during automatic packaging, and in addition, a sealed part can be made to be superior in sealing tightness and the whole film is unlikely to shrink thanks to a lower heat seal temperature, wrinkles are unlikely to be generated at a heat sealed part, and the seal tightness at the heat sealed part can be further improved. Nevertheless, it is preferable for the surface layer (B) to have an onset temperature of heat sealing of 115°C or higher from the viewpoint of melt cut seal strength.

### (Heat seal attainable strength at 130°C)

The biaxially oriented polypropylene-based resin film of the present invention preferably has a heat seal attainable strength at 130°C in both the longitudinal direction and the width direction obtained by the measurement method described later of 3.5 N/15mm or more in order to prevent the contents from falling, more preferably 4.0 N/15mm or more, and even more preferably 4.5 N/15mm or more.

### (Heat seal attainable strength at 140°C)

The biaxially oriented polypropylene-based resin film of the present invention preferably has a heat seal attainable strength at 140°C in both the longitudinal direction and the width direction obtained by the measurement method described later of 4.0 N/15mm or more in order to prevent the contents from falling, and more preferably 4.5 N/15mm or more.

### (Ring crash)

The biaxially oriented polypropylene-based resin film of the present invention preferably has a ring crash in the longitudinal direction obtained by the measurement method described later of 0.40 Kg or more.

The biaxially oriented polypropylene-based resin film of the present invention preferably has a ring crash in the width direction obtained by the measurement method described later of 0.50 Kg or more.

### (Suitability for automatic packaging)

The biaxially oriented polypropylene-based resin film of the present invention preferably has evaluation of suitability for automatic packaging of "Excellent" or "fair", and more preferably "Excellent".

### (Melt cut seal strength)

The biaxially oriented polypropylene-based resin film of the present invention preferably has a melt cut seal strength of 19 N/15mm or more, and more preferably 20 N/15mm or more.

### EXAMPLES

Hereinafter, embodiments of the present invention will be specifically described with reference to examples, however, the present invention is not restricted by the following examples insofar as it meets the gist of the preset invention. Properties in the present specification is evaluated in the manner described below.

### (1) DSC melting point

A temperature of the maximum melting peak of a DSC curve of a polyolefin-based resin film obtained with a Shimadzu differential scanning calorimeter DSC-60 manufactured by Shimadzu corporation was determined to be a melting point. The start temperature was 30°C, the temperature ramp rate was 5°C/min, and the end temperature was 180°C. Five samples were measured and the measured values were averaged.

### (2) Mesopentad fraction

Mesopentad fraction ([mmmm]%) of polypropylene resin was measured with ¹³C-NMR, and calculated in accordance with the process described in "Zambelli et al., Macromolecules, vol. 6, page 925, 1973". For ¹³C-NMR measurement, 200 mg of a sample was dissolved in a mixed solvent of o-dichlorobenzene-d4 and benzene-d6 at the ratio of 8:2 at 135°C, and measured at 110°C using AVANCE500 manufactured by Bruker corporation. Five samples were measured and the measured values were averaged.

As for polypropylene-based resin composed of a mixture of two or more polypropylene resins, the mixture was measured in the above way to determine its mesopentad fraction.

### (3) Melt flow rate (MFR)

Melt flow rate (MFR) was measured in accordance with JIS K7210 at 230°C under a load of 2.16 kgf.

For an isotactic mesopentad fraction of polypropylene-based resin composed of a mixture of two or more polypropylene resins, the mixture was measured in the above way and the obtained value was used.

### (4) Ratio of a olefin monomer-derived component (% by mole)

Contents of propylene, butene-1, and ethylene in propylene-ethylene copolymer, propylene-butene-1 copolymer, and propylene-ethylene-butene-1 copolymer were determined by 13C-NMR spectrum method in accordance with the method described in pages 615-617, Polymer Analysis handbook (issued by Kinokuniya Co., Ltd., 1995). They also can be determined by IR spectrum method in accordance with the method described in page 256, item "(i) Random copolymer" of the handbook.

For contents of a olefin monomer-derived component of polypropylene-based resin composed of a mixture of two or more polypropylene resins, the mixture was measured in the above way and the obtained value was used.

### (5) Total thickness of the film

A sample having a size of 1 cm × 1 cm was cut out from the biaxially oriented polypropylene-based resin film, from which a cross-section sample was made with a microtome, and the cross-section sample was observed with a differential interference microscope to determine a thickness of the base layer (A), a thickness of surface layer (B), and a total thickness of the film. Five areas of the sample were observed. and the average value was calculated.

### (6) Young's modulus, F5, tensile strength at break, tensile elongation at break

A sample having 200 mm in the longitudinal direction and 15 mm in the width direction was cut out from the biaxially oriented polypropylene-based resin film, and the sample was set to a tensile tester (dual column table-top tester Instron 5965 manufactured by Instron Japan Co., Ltd.) with a chuck width of 100 mm. The tensile test was performed at 23°C, at a tensile rate of 200 mm/min in accordance with JIS K7127.

In the obtained strain-stress curve, a Young's modulus was determined from a slope of the straight-line portion from the onset of elongation to 0.6% elongation, and a stress at 5% elongation was determined to be F5. A strength and an elongation when the sample was broken were determined to be a tensile strength at break and a tensile elongation at break, respectively. Five samples were measured and the measured values were averaged.

A sample having 200 mm in the width direction and 15 mm in the longitudinal direction was cut out from the film, and similarly measured. Note that the longitudinal direction mentioned here means a direction along which a film travels during the process from casting of raw resin composition to winding up a stretched film, and the width direction means a direction perpendicular to the direction along which a film travels. This is similarly applied to the following measurement.

### (7) Heat shrinkage ratio

A sample having 200 mm in the longitudinal direction and 20 mm in the width direction was cut out from the biaxially oriented polypropylene-based resin film. The sample was hung in a hot air oven at 120°C and heated for 5 minutes, and length of the sample after being heated was measured in accordance with JIS Z1712.

A ratio of the difference between the sample length after being heated and the sample length before being heated to the sample length before being heated was determined to be a heat shrinkage ratio. Five samples were measured and the measured values were averaged.

A sample having 200 mm in the width direction and 20 mm in the longitudinal direction was cut out from the biaxially oriented polypropylene-based resin film, and similarly measured.

### (8) Haze

One side and the other side of a biaxially oriented polypropylene-based resin film were measured with a haze meter (NDH5000 manufactured by Nippon Denshoku Industries Co., Ltd.) at 23°C in accordance with JIS K7105. The average of these values was calculated.

### (9) Gloss

One side and the other side of a biaxially oriented polypropylene-based resin film were measured with a gloss meter (VG-1D manufactured by Nippon Denshoku Industries Co., Ltd.) in accordance with JIS K7105 5.2 Gloss, 2004 to obtain 60° specular gloss in the longitudinal direction of the film. The average of these values was calculated.

### (10) Kinetic friction coefficient

Two pieces of a biaxially oriented polypropylene-based resin film was placed such that surfaces of the surface layer (B) were face-to-face, and measured at 23°C in accordance with JIS K7125. Five sets of sample were measured and the measured values were averaged.

### (11) Wet tension (mN/m)

A sample having 297 mm in the longitudinal direction and 210 mm in the width direction was cut out from the biaxially oriented polypropylene-based resin film, and the sample was aged at 23°C and a relative humidity of 50% for 24 hours, and a corona treated surface of the sample was measured in a test room atmosphere of 23°C and a relative humidity of 50% in the following manner in accordance with JIS K7100.

The test sample was placed on a substrate of a hand coater, and a few drops of mixed liquid for the test were dropped on the test sample, and a wire bar was drawn to immediately spread the liquid. In a case where the mixed liquid for the test was spread with a cotton swab or a brush, the liquid should be spread promptly so that the area of the liquid became at least 6 cm² or more. The amount of the liquid should be controlled not to make a pool but form a thin layer.

The liquid film of the mixed liquid for the test was observed under a bright light, and wet tension was judged from the condition of the liquid film after 3 seconds. When the liquid film maintained the condition that looked like it was just after being applied and did not break for 3 seconds or longer, the sample was judged as being wet.

In the case where the wet condition continued for 3 seconds or longer, then next mixed liquid having higher surface tension than the first mixed liquid was used.

Conversely, in the case where the liquid film was broken in 3 seconds or shorter, then next mixed liquid having lower surface tension than the first mixed liquid was used.

The process was repeated to select mixed liquid that could wet the surface of the test sample exactly for 3 seconds.

New cotton swabs were used for each test. The wire bar and the brush were washed with methanol and dried every time they were used, because evaporation of residual liquid might affect the composition and the surface tension.

The process of selecting the mixed liquid that could wet the surface of the corona treated surface for just 3 seconds was repeated at least 3 times. The surface tension of the selected mixed liquid in the above manner was reported as wet tension of the film.

### (12) Surface specific resistivity (LogQ)

A sample having 100 mm in the longitudinal direction and 100 mm in the width direction was cut out from the biaxially oriented polypropylene-based resin film, and aged at 23°C for 24 hours, and a corona treated surface of the sample was measured in accordance with JIS K6911.

### (13) Water vapor permeability

A sample having 100 mm in the longitudinal direction and 100 mm in the width direction was cut out from the biaxially oriented polypropylene-based resin film, and a corona treated surface of the sample was placed on the side of higher humidity, and the sample was measured at 37.8°C and a humidity of 90% using a water vapor permeation analyzer (PERMATRAN-W3/33 manufactured by Mocon). Three samples were measured and the measured values were averaged.

### (14) Onset temperature of heat sealing

A sample having 20 cm in the longitudinal direction and 5 cm in the width direction was cut out from the biaxially oriented polypropylene-based resin film. Two pieces of the sample were placed such that the corona treated surfaces of the surface layer (B) were face-to-face, and heat sealed simultaneously with five heat seal bars each of which had a seal surface having 3 cm in the long axis direction and 1 cm in the short axis direction and had a gap to the adjacent seal bar in the longitudinal direction of the seal bars of 1 cm. One of the five heat seal bars had the lowest temperature of 80°C, and the five heat seal bars had temperatures each of which had difference of 5°C. The heat seal pressure was 1 kg/cm², and heat seal duration was 1 second. The heat seal bar was placed so that the long axis direction of the heat seal bar was parallel to the longitudinal direction of the film, and the long axis of the heat seal bar was located at the center part in the width direction of the film. The distance between the end part of the sample in the short axis direction and the seal bar was 0.5 cm.

In the same manner as the above, the sample was heat sealed with five heat seal bars. At this time, one of the five heat seal bars had the lowest temperature of 105°C, and the five heat seal bars had temperatures each of which had difference of 5°C.

A center part of 15mm in the longitudinal direction of each heat sealed part (3 cm × 1 cm) was cut from each sample in the width direction, which was set to an upper and lower chucks of a tensile tester (dual column table-top tester 5965 manufactured by Instron Japan Co., Ltd.), and heat seal strength (unit: N/15mm) of each sample was measured at a tension rate of 200 mm/min.

A line graph was prepared with the temperature on the abscissa and the heat seal strength on the ordinate to determine an onset temperature of heat sealing that is a temperature at which heat seal strength became 1 N/15mm. The process was repeated three times and the average was calculated.

### (15) Heat seal attainable strength

A sample having 297 mm in the longitudinal direction and 210 mm in the width direction was cut out from the biaxially oriented polypropylene-based resin film. Two pieces of the sample were placed such that the corona treated surface of the surface layer (B) were face-to-face, and heat sealed with a heat seal bar having a seal surface having 15 mm in the long axis direction and 30 mm in the short axis direction using a thermal gradient tester (manufactured by Toyo Seiki Co., Ltd.). The temperature of the heat seal bar was set to be 130°C. The heat seal pressure was 1 kg/cm², and heat seal duration was 1 second. The heat seal bar was placed so that the long axis direction of the heat seal bar was parallel to the longitudinal direction of the film, and the long axis of the heat seal bar was located at the center part in the width direction of the film. Three samples were measured and the measured values were averaged.

Similarly, the measurement was also performed at 140°C.

### (16) Melt cut seal strength

Using a melt cut sealing machine (PP500 manufactured by Kyoei Co., Ltd.), the biaxially oriented polypropylene-based resin film was formed into a melt cut sealed bag such that a corona treated surface was inside the bag.

Conditions:
Melt cut blade: edge angle of 60°
Sealing temperature: 370°C
Number of shots: 120 bags/min
Shape of bag: 20 cm in the lengthwise direction, 20 cm in the horizontal direction, and the lengthwise direction was the transverse direction of the film.

The melt cut sealed part of the bottom of the melt cut sealed bag was cut in the lengthwise direction into a piece such that the width in the horizontal direction of the cut piece was 15 mm, and both ends of the cut piece was held without slack by holding portions of a tensile tester (dual column table-top tester 5965 manufactured by Instron Japan Co., Ltd.) such that the gap of the holding portions was 200 mm, which was pulled at a tensile speed of 200 mm/min, and a strength when the sealed part was broken was determined to be a melt cut seal strength (N/15mm). Five samples were measured and the measured values were averaged.

### (17) Ring crash

A sample having 152 mm in the longitudinal direction and 12.7 mm in the width direction was cut out from the biaxially oriented polypropylene-based resin film. An attachment of a spacer was set on a sample table of a digital ring crash tester (manufactured by Tester Sangyo Co., Ltd.) so as to fit with the sample thickness, and inserted along the circumference such that the long axis was in the circumference direction. The maximum load when a compression board was compressed at 23°C and a descending rate of 12 mm/min was determined to be a measured value of ring crash. Three samples were measured and the measured values were averaged.

A sample having 152 mm in the width direction and 12.7 mm in the longitudinal direction was cut out from the biaxially oriented polypropylene-based resin film, and similarly measured.

### (18) Suitability for automatic packaging

Using a horizontal pillow packaging machine (PP500 manufactured by Kyoei Co., Ltd.), the biaxially oriented polypropylene-based resin film was formed into a pillow package such that a corona treated surface was inside the bag.

Conditions:
Melt cut blade: edge angle of 60°
Sealing temperature: 370°C
Number of shots: 120 bags/min
Shape of bag: 20 cm in the lengthwise direction, 20 cm in the horizontal direction, and the lengthwise direction was the width direction of the film.

Based on smoothness when the film runs and degree of wrinkles of the produced package, suitability for automatic packaging was evaluated on the following three scales.

Excellent: smooth-running of the film, no wrinkle of the produced package

Fair: bad in either smooth-running of the film or wrinkle of the produced package

Bad: bad in both smooth-running of the film and wrinkle of the produced package

Polypropylene resin constituting each layer used in the following examples and comparative examples was as follows:
[PP-1] Propylene homopolymer: FL203D manufactured by Japan Polypropylene Corporation, MFR: 3 g/lOmin, melting point: 160.6°C, mesopentad fraction: 94.8%
[PP-2] Propylene homopolymer: FY6H manufactured by Japan Polypropylene Corporation, MFR: 1.9 g/lOmin, melting point: 163°C, mesopentad fraction: 98.9%
[PP-3] Propylene homopolymer: FS2012 manufactured by Sumitomo Chemical Co., Ltd., MFR: 2.5 g/lOmin, melting point: 163°C, mesopentad fraction: 98.7%
[PP-4] Propylene-ethylene random copolymer: FS2011DG3 manufactured by Sumitomo Chemical Co., Ltd., ethylene content: 0.6% by mole, MFR: 2.7 g/lOmin, melting point: 158°C, mesopentad fraction: 97.0%
[PP-5] Propylene-ethylene-butene random copolymer: FSX66E8 manufactured by Sumitomo Chemical Co., Ltd., ethylene content: 2.5% by mole, butene content: 7% by mole, MFR: 3.1g/10min, melting point: 133°C
[PP-6] Propylene-butene-1 copolymer: SP3731 manufactured by Sumitomo Chemical Co., Ltd., butene content: 12% by mole, MFR: 8.5g/10min, melting point: 130°C
[PP-7] Propylene-butene-1 copolymer: SPX38F4 manufactured by Sumitomo Chemical Co., Ltd., butene content: 25% by mole, MFR: 8.5 g/lOmin, melting point 128°C

### (Example 1)

A mixture of 57% by weight of [PP-1] and 43% by weight of [PP-2] was used as a resin for the base layer (A).

A mixture of 70% by weight of [PP-5] and 30% by weight of [PP-6] was used as a resin for the surface layer (B).

Using two melt extruders, the resin for the base layer (A) was melt extruded at a resin temperature of 280°C from a first extruder, and the resin for the surface layer (B) was melt extruded at a resin temperature of 250°C from a second extruder, which were laminated in a T-die in the order of the surface layer (B)/ the base layer (A)/ the surface layer (B) from a contact surface with a chill roll, and were extruded, and cooled and solidified by a cooling roll having a temperature of 30°C to obtain an unstretched sheet. Subsequently, the unstretched sheet was stretched by 4.5 times in the longitudinal direction between metal rolls heated at 130°C using the difference in circumferential velocity, and introduced to a tenter stretching machine and stretched by 9.5 times in the width direction. A temperature of a preheat zone of the tenter stretching machine was 175°C, and a temperature of a stretching zone of the tenter stretching machine was 165°C.

Furthermore, after being stretched in the width direction, the stretched film was heat-fixed at 165°C. Next, using a corona discharge treatment machine manufactured by Kasuga Denki Inc., corona discharge treatment was performed on a surface of the surface layer (B) that is not the contact surface with the chill roll, and the film was wound with a film winder to obtain a biaxially oriented polypropylene-based resin film. The thickness of the obtained film was 35 µm. The ratio of the thickness of each layer was the surface layer (B)/ the base layer (A)/ the surface layer (B) = 0.8 µm/ 33.4µm/ 0.8µm.

The obtained biaxially oriented polypropylene-based resin film, which satisfied the requirements of the present invention, had enough heat seal strength and heat seal attainable strength at a low temperature, and had suitability for both automatic packaging and melt cut sealing. The film composition and the resulting properties are shown in Table 1.

### (Example 2)

A biaxially oriented polypropylene-based resin film was obtained in the same manner as the Example 1 except altering the ratio of the thickness of each layer the surface layer (B)/ the base layer (A)/ the surface layer (B) to 1.5 µm/ 32.0µm/ 1.5µm. Like the film obtained in the Example 1, the obtained film had enough heat seal strength and heat seal attainable strength at a low temperature, and had suitability for both automatic packaging and melt cult sealing. The film composition and the resulting properties are shown in Table 1.

### (Example 3)

A biaxially oriented polypropylene-based resin film was obtained in the same manner as the Example 1 except using a mixture of 47% by weight of [PP-1] and 53% by weight of [PP-2] as a resin for the base layer (A). Like the film obtained in the Example 1, the obtained film had enough heat seal strength and heat seal attainable strength at a low temperature, and had suitability for both automatic packaging and melt cut sealing. The film composition and the resulting properties are shown in Table 1.

### (Example 4)

A biaxially oriented polypropylene-based resin film was obtained in the same manner as the Example 1 except using a mixture of 67% by weight of [PP-1] and 33% by weight of [PP-2] as a resin for the base layer (A). Like the film obtained in the Example 1, the obtained film had enough heat seal strength and heat seal attainable strength at a low temperature, and had suitability for both automatic packaging and melt cut sealing. The film composition and the resulting properties are shown in Table 1.

### (Example 5)

A biaxially oriented polypropylene-based resin film was obtained in the same manner as the Example 1 except using 100% by weight of [PP-3] as a resin for the base layer (A). Like the film obtained in the Example 1, the obtained film had enough heat seal strength and heat seal attainable strength at a low temperature, and had suitability for both automatic packaging and melt cut sealing. The film composition and the resulting properties are shown in Table 1.

### (Example 6)

A mixture of 43% by weight of [PP-2] and 57% by weight of a mixture ([PP-8]) obtained by mixing [PP-1] with 0.16% by weight of glyceryl monostearate (TB-123, manufactured by Matsumoto Yushi-Seiyaku Co., Ltd.), 0.2% by weight of polyoxyethylene(2)stearylamine (TB-12, manufactured by Matsumoto Yushi-Seiyaku Co., Ltd.), and 0.6% by weight of polyoxyethylene(2)stearylamine monostearate (Elex 334, manufactured by Matsumono Yushi-Seiyaku Co., Ltd) was used as a resin for the base layer (A).

A mixture of 25% by weight of [PP-6] and 70% by weight of a mixture ([PP-9]) obtained by mixing [PP-5] with 0.50 % by weight of glyceryl monostearate (TB-123, manufactured by Matsumoto Yushi-Seiyaku Co., Ltd.) was used as a resin for the seal layer (B). A biaxially oriented polypropylene-based resin film was obtained in the same manner as the Example 1 except the above resins.

The obtained biaxially oriented polypropylene-based resin film, which satisfied the requirements of the present invention, had enough heat seal strength and heat seal strength and heat seal attainable strength at a low temperature, and had suitability for both automatic packaging and melt cut sealing. The film composition and the resulting properties are shown in Table 1.

### (Comparative example 1)

As a resin for the base layer (A), 100% by weight of [PP-4] was used, and a mixture of 82% by weight of [PP-5] and 18% by weight of [PP-6] was used as a resin for the surface layer (B).

Using two melt extruders, the resin for the base layer (A) was melt extruded at a resin temperature of 280°C from a first extruder, and the resin for the surface layer (B) was melt extruded at a resin temperature of 250°C from a second extruder, which were laminated in a T-die in the order of the surface layer (B)/ the base layer (A)/ the surface layer (B) from a contact surface with a chill roll, and were extruded, and cooled and solidified by a cooling roll having a temperature of 30°C to obtain an unstretched sheet. Subsequently, the unstretched sheet was stretched by 4.5 times in the longitudinal direction between metal rolls heated at 130°C using the difference in circumferential velocity, and introduced to a tenter stretching machine and stretched by 9.5 times in the width direction. A temperature of a preheat zone of the tenter stretching machine was 168°C, and a temperature of a stretching zone of the tenter stretching machine was 158°C.

Furthermore, in the latter half of the tenter stretching machine, the stretched film was heat-fixed at 165°C, and then, corona discharge treatment was performed on a surface of the surface layer (B) using a corona discharge treatment machine manufactured by Kasuga Denki Inc., and the film was wound with a film winder to obtain a biaxially oriented polypropylene-based resin film that is available for automatic packaging. The thickness of the obtained film was 35 µm. The ratio of the thickness of each layer was the surface layer (B)/ the base layer (A)/ the surface layer (B) = 1.1 µm/ 32.8µm/ 1.1µm.

The obtained biaxially oriented polypropylene-based resin film had low initial Young's modulus, and was inferior in elasticity. The film composition and the resulting properties are shown in Table 2.

### (Comparative example 2)

A laminated film was obtained in the same manner as the Comparative example 1 except using a mixture of 70% by weight of [PP-5] and 30% by weight of [PP-6] as a resin for the surface layer (B). The obtained biaxially oriented polypropylene-based resin film was inferior in suitability for melt cut sealing. The film composition and the resulting properties are shown in Table 2.

### (Comparative example 3)

As a resin for the base layer (A), 57% by weight of [PP-1] and 43% by weight of [PP-2] was used.

As a resin for the surface layer (B), 70% by weight of [PP-5] and 30% by weight of [PP-6] was used.

Using two melt extruders, the resin for the base layer (A) was melt extruded at a resin temperature of 280°C from a first extruder, and the resin for the surface layer (B) was melt extruded at a resin temperature of 250°C from a second extruder, which were laminated in a T-die in the order of the surface layer (B)/ the base layer (A)/ the surface layer (B) from a contact surface with a chill roll, and were extruded, and cooled and solidified by a cooling roll having a temperature of 30°C to obtain an unstretched sheet. Subsequently, the unstretched sheet was stretched by 4.5 times in the longitudinal direction between metal rolls heated at 120°C using the difference in circumferential velocity, and introduced to a tenter stretching machine and stretched by 9.5 times in the width direction. A temperature of a preheat zone of the tenter stretching machine was 172°C, and a temperature of a stretching zone of the tenter stretching machine was 159°C.

Furthermore, in the latter half of the tenter stretching machine, the stretched film was heat-fixed at 165°C, and then, corona discharge treatment was performed on a surface of the surface layer (B) using a corona discharge treatment machine manufactured by Kasuga Denki Inc., and the film was wound with a film winder to obtain a biaxially oriented polypropylene-based resin film that is available for automatic packaging. The thickness of the obtained film was 35 µm. The ratio of the thickness of each layer was the surface layer (B)/ the base layer (A)/ the surface layer (B) = 2.0 µm/ 31.0 µm/ 2.0 µm.

The obtained biaxially oriented polypropylene-based resin film was inferior in suitability for heat sealing at a low temperature. The film composition and the resulting properties are shown in Table 2.

### (Comparative example 4)

As a resin for the base layer (A), 100% by weight of [PP-4] was used, and a mixture of 20% by weight of [PP-5] and 80% by weight of [PP-7] was used as a resin for the surface layer (B).

Using two melt extruders, the resin for the base layer (A) was melt extruded at a resin temperature of 280°C from a first extruder, and the resin for the surface layer (B) was melt extruded at a resin temperature of 250°C from a second extruder, which were laminated in a T-die in the order of the surface layer (B)/ the base layer (A)/ the surface layer (B) from a contact surface with a chill roll, and were extruded, and cooled and solidified by a cooling roll having a temperature of 30°C to obtain an unstretched sheet. Subsequently, the unstretched sheet was stretched by 4.5 times in the longitudinal direction between metal rolls heated at 120°C using the difference in circumferential velocity, and introduced to a tenter stretching machine and stretched by 9.5 times in the width direction. A temperature of a preheat zone of the tenter stretching machine was 172°C, and a temperature of a stretching zone of the tenter stretching machine was 159°C.

Furthermore, in the latter half of the tenter stretching machine, the stretched film was heat-fixed at 165°C, and then, corona discharge treatment was performed on a surface of the surface layer (B) using a corona discharge treatment machine manufactured by Kasuga Denki Inc., and the film was wound with a film winder to obtain a biaxially oriented polypropylene-based resin film that is available for automatic packaging. The thickness of the obtained film was 35 µm. The ratio of the thickness of each layer was the surface layer (B)/ the base layer (A)/ the surface layer (B) = 1.1 µm/ 32.8µm/ 1.1µm.

The obtained biaxially oriented polypropylene-based resin film was inferior in suitability for both heat sealing at a low temperature and melt cut sealing. The film composition and the resulting properties are shown in Table 2.

### (Comparative example 5)

A laminate film was obtained in the same manner as the Example 1 except using 100% by weight of [PP-1]. The obtained biaxially oriented polypropylene-based resin film was inferior in suitability for melt cut sealing. The film composition and the resulting properties are shown in Table 2.

**[Table 1]**

| | | | Example 1 | Example 2 | Example 3 | Example 4 | Example 5 | Example 6 |
|---|---|---|---|---|---|---|---|---|
| Base layer (A) | Polypropylene resin | PP-1 | 57 | 57 | 47 | 67 | 0 | 0 |
| | | PP-2 | 43 | 43 | 53 | 33 | 0 | 43 |
| | | PP-3 | 0 | 0 | 0 | 0 | 100 | 0 |
| | | PP-4 | 0 | 0 | 0 | 0 | 0 | 0 |
| | | PP-8 | 0 | 0 | 0 | 0 | 0 | 57 |
| | Thickness | | 33.4 | 32.0 | 33.4 | 33.4 | 33.4 | 32.0 |
| Base layer (A) | Mesopentad fraction | (%) | 96.1 | 96.1 | 96.6 | 95.6 | 99.2 | 96.1 |
| resin composition properties | Ethylene monomer content | (mol%) | 0.0 | 0.0 | 0.0 | 0.0 | 0.0 | 0.0 |
| | M F R (g/10min) | | 2.5 | 2.5 | 2.4 | 2.6 | 2.5 | 2.5 |
| Seal layer (B) | Polypropylene resin | PP-5 | 70 | 70 | 70 | 70 | 70 | 0 |
| | | PP-6 | 30 | 30 | 30 | 30 | 30 | 30 |
| | | PP-7 | 0 | 0 | 0 | 0 | 0 | 0 |
| | | PP-9 | 0 | 0 | 0 | 0 | 0 | 70 |
| | Content ratio of butene-1 derived component (mol%) monomer-(mol%) | | 5.7 | 5.7 | 5.7 | 5.7 | 5.7 | 5.7 |
| | Thickness of one layer | | 0.8 | 1.5 | 0.8 | 0.8 | 0.8 | 0.8 |
| | Total thickness | | 1.6 | 3.0 | 1.6 | 1.6 | 1.6 | 1.6 |
| Total film thickness (µm) | | | 35 | 35 | 35 | 35 | 35 | 35 |
| Thickness ratio of seal layer (B) (%) | | | 4.6 | 8.6 | 4.6 | 4.6 | 4.6 | 4.6 |
| Film properties | Young's modulus (GPa) | MD | 2.2 | 2.44 | 2.12 | 2.06 | 2.04 | 2.19 |
| | | TD | 4.5 | 4.91 | 4.64 | 4.66 | 4.3 | 4.48 |
| | F5 value (%) | MD | 45 | 46 | 41 | 40 | 39 | 44 |
| | | TD | 120 | 125 | 114 | 125 | 113 | 120 |
| | Strength at break (MPa) | MD | 158 | 167 | 146 | 140 | 127 | 149 |
| | | TD | 392 | 390 | 376 | 398 | 356 | 378 |
| | Elongation at break (%) | MD | 249 | 260 | 244 | 246 | 242 | 253 |
| | | TD | 48 | 42 | 43 | 51 | 42 | 47 |
| | Heat shrinkage at 120°C (%) | MD | 2.1 | 1.7 | 2.4 | 2.7 | 1.8 | 2.2 |
| | | TD | 1 | 0.9 | 1.5 | 1.6 | 0.9 | 0.8 |
| | Haze (%) | | 4 | 4 | 4 | 4 | 4 | 4 |
| | Gloss (%) | MD | 134 | 126 | 137 | 139 | 144 | 139 |
| | | TD | 134 | 122 | 135 | 140 | 139 | 139 |
| | Kinetic friction coefficient | MD | 0.20 | 0.19 | 0.25 | 0.22 | 0.24 | 0.23 |
| | | TD | 0.21 | 0.21 | 0.24 | 0.28 | 0.29 | 0.33 |
| | Wet tension (mN/m) | MD | 38 | 38 | 38 | 36 | 36 | 38 |
| | | TD | 37 | 36 | 40 | 38 | 37 | 37 |
| | Surface specific resistivity (LogΩ) | MD | 11.2 | 11.3 | 12.3 | 11.9 | 12 | 11.3 |
| | | TD | 11.4 | 11.3 | 11.8 | 11.7 | 11.9 | 11.2 |
| | Water vapor permeability | (g/m²•d) Corona | 4.1 | 4.0 | 3.5 | 4.1 | 4.2 | 4.1 |
| | Onset temperature of heat sealing (°C) | treated surface | 123 | 123 | 123 | 123 | 123 | 123 |
| | Heat seal attainable strength at 130°C (N/15mm) | MD | 4.0 | 4.9 | 4.4 | 4.9 | 4.1 | 4.1 |
| | | TD | 3.8 | 5.1 | 4.9 | 4.7 | 4.3 | 3.9 |
| | Heat seal attainable strength at 140°C (N/15mm) | MD | 4.3 | 4.7 | 4.6 | 3.6 | 3.9 | 4.5 |
| | | TD | 4.9 | 5.1 | 5.0 | 5.1 | 4.7 | 4.52 |
| | Melt cut seal strength (N/15mm) | | 22 | 20 | 21 | 20 | 22 | 21 |
| | Ring crash (kg) | MD | 0.4 | 0.4 | 0.4 | 0.4 | 0.4 | 0.4 |
| | | TD | 0.5 | 0.5 | 0.5 | 0.5 | 0.5 | 0.5 |
| | Suitability for automatic packaging | | Excellent | Excellent | Excellent | Excellent | Excellent | Excellent |

| | | | | | | | | |
|---|---|---|---|---|---|---|---|---|
| (Note) MD: longitudinal direction; TD: transverse direction | | | | | | | | |

**[Table 2]**

| | | | Comparative Example 1 | Comparative Example 2 | Comparative Example 3 | Comparative Example 4 | Comparative Example 5 |
|---|---|---|---|---|---|---|---|
| Base Layer (A) | Polypropylene resin | PP-1 | 0 | 0 | 57 | 0 | 100 |
| | | PP-2 | 0 | 0 | 43 | 0 | 0 |
| | | PP-3 | 0 | 0 | 0 | 0 | 0 |
| | | PP-4 | 100 | 100 | 0 | 100 | 0 |
| | | PP-8 | 0 | 0 | 0 | 0 | 0 |
| | Thickness | | 32.8 | 32.0 | 31.0 | 32.8 | 33.4 |
| Base Layer (A) resin composition properties | Mesopentad fraction (%) | | 97.0 | 97.0 | 96.1 | 97.0 | 94.0 |
| | Ethylene monomer content (mol%) | | 0.6 | 0.6 | 0.0 | 0.6 | 0.0 |
| | M F R (g/10min) | | 2.5 | 2.5 | 2.5 | 2.5 | 3.0 |
| Seal layer (B) | Polypropylene resin | PP-5 | 82 | 70 | 70 | 20 | 70 |
| | | PP-6 | 18 | 30 | 30 | 0 | 30 |
| | | PP-7 | 0 | 0 | 0 | 80 | 0 |
| | | PP-9 | 0 | 0 | 0 | 0 | 0 |
| | Content ratio of butene-1 monomer-derived component (mol%) | | 4.5 | 5.7 | 5.7 | 20 | 5.7 |
| | Thickness of one layer | | 1.1 | 1.5 | 2.0 | 1.1 | 0.8 |
| | Total thickness | | 2.2 | 3.0 | 4.0 | 2.2 | 1.6 |
| Total film thickness (µm) | | | 35 | 35 | 35 | 35 | 35 |
| Thickness ratio of seal layer (B) (%) | | | 6.3 | 8.6 | 11.4 | 6.3 | 4.6 |
| Film properties | Young's modulus (Gpa) | MD | 1.63 | 1.62 | 2.43 | 1.83 | 1.7 |
| | | TD | 3.19 | 3.23 | 4.68 | 3.29 | 3.43 |
| | F5 value (%) | MD | 31 | 30 | 46 | 32 | 35 |
| | | TD | 89 | 88 | 119 | 70 | 93 |
| | Strength at break (Mpa) | MD | 122 | 120 | 161 | 132 | 132 |
| | | TD | 303 | 310 | 367 | 313 | 316 |
| | Elongation at break (%) | MD | 190 | 187 | 253 | 189 | 220 |
| | | TD | 32 | 32 | 42 | 31 | 38 |
| | Heat shrinkage at 120°C (%) | MD | 3.8 | 3.7 | 1.6 | 4 | 3.8 |
| | | TD | 0.8 | 0.8 | 0.7 | 1 | 0.8 |
| | Haze (%) | | 4 | 4 | 4 | 4 | 4 |
| | Gloss (%) | MD | 133 | 133 | 131 | 122 | 133 |
| | | TD | 133 | 134 | 126 | 124 | 134 |
| | Kinetic friction coefficient | MD | 0.23 | 0.23 | 0.22 | 0.27 | 0.23 |
| | | TD | 0.23 | 0.23 | 0.2 | 0.28 | 0.23 |
| | Wet tension (mN/m) | MD | 40 | 40 | 35 | 39 | 40 |
| | | TD | 40 | 40 | 36 | 38 | 40 |
| | Surface specific resistivity (LogΩ) | MD | 11.1 | 11.0 | 10.8 | 10.8 | 11.1 |
| | | TD | 11.2 | 11.1 | 11 | 11 | 11.1 |
| | Water vapor permeability (g/m²• d) | | 4.7 | 5.1 | 4.0 | 4.1 | 4.7 |
| | Onset temperature of heat sealing (°C) | Corona treated surface | 128 | 117 | 123 | 115 | 128 |
| | Heat seal attainable strength at 130°C (N/15mm) | MD | 2.8 | 4.8 | 5.1 | 3.1 | 2.8 |
| | | TD | 2.7 | 5.1 | 5.2 | 3.2 | 2.7 |
| | Heat seal attainable strength at 140°C (N/15mm) | MD | 3.6 | 5.2 | 5.3 | 3.8 | 3.6 |
| | | TD | 3.7 | 5.1 | 5.2 | 3.7 | 3.7 |
| | Melt cut seal strength (N/15mm) | | 16 | 14 | 10 | 16 | 16 |
| | Ring crash (kg) | MD | 0.3 | 0.3 | 0.4 | 0.3 | 0.3 |
| | | TD | 0.4 | 0.4 | 0.5 | 0.4 | 0.4 |
| | Suitability for automatic packaging | | Bad | Bad | Bad | Bad | Bad |

| | | | | | | | |
|---|---|---|---|---|---|---|---|
| (Note) MD: longitudinal direction; TD: transverse direction | | | | | | | |

### INDUSTRIAL APPLICABILITY

The polypropylene-based laminated film having high stiffness of the present invention allows contents to look fine when greengroceries are packaged by it and displayed on shelves, and contributes to reduction of environmental burdens by reducing the film thickness, which means it is suitable for packaging of greengroceries. Accordingly, it greatly contributes to industry.

## Claims

1. A biaxially oriented polypropylene-based resin film, comprising:
a base layer (A) consisting of a polypropylene-based resin composition; and
surface layers (B) consisting of a polypropylene-based resin composition on both sides of the base layer (A),
the biaxially oriented polypropylene-based resin film satisfying the following a) to d):
a) a mesopentad fraction of the whole polypropylene-based resin composition constituting the base layer (A) of 95.0% or more and 99.5% or less;
b) a ratio of an α-olefin monomer-derived component to a total of a propylene monomer-derived component and the α-olefin monomer-derived component in the whole polypropylene-based resin composition constituting the base layer (A) of 0.2% by mole or less;
c) a ratio of a butene-1 monomer-derived component to a total of a propylene monomer-derived component and an α-olefin monomer-derived component in the polypropylene-based resin composition constituting the surface layers (B) of 5% by mole or more and 10% by mole or less; and
d) a thickness of the biaxially oriented polypropylene-based resin film of 60 µm or less, and a ratio of a thickness of the surface layers (B) to the total layer thickness of the biaxially oriented polypropylene-based resin film of 3% or more and 10% or less.

2. A biaxially oriented polypropylene-based resin film, comprising:
a base layer (A) consisting of a polypropylene-based resin composition; and
surface layers (B) consisting of a polypropylene-based resin composition on both sides of the base layer (A),
the biaxially oriented polypropylene-based resin film satisfying the following A) to D):
(A) a melting point peak temperature of a polypropylene-based resin having the lowest DSC melting point in the polypropylene-based resin composition constituting the base layer (A) of 160°C or higher;
(B) a ratio of an α-olefin monomer-derived component to a total of a propylene monomer-derived component and the α-olefin monomer-derived component in the whole polypropylene-based resin composition constituting the base layer (A) of 0.2% by mole or less;
(C) a ratio of a butene-1 monomer-derived component to a total of a propylene monomer-derived component and an α-olefin monomer-derived component in the polypropylene-based resin composition constituting the surface layers (B) of 5% by mole or more and 10% by mole or less; and
(D) a thickness of the biaxially oriented polypropylene-based resin film of 60 µm or less, and a ratio of a thickness of the surface layers (B) to the total layer thickness of the biaxially oriented polypropylene-based resin film of 3% or more and 10% or less.

3. The biaxially oriented polypropylene-based resin film according to claim 1 or 2, wherein a melt flow rate (MFR) of the whole polypropylene-based resin composition constituting the base layer (A) is 2.0 g/10min or more and 4.5 g/10min or less.

4. The biaxially oriented polypropylene-based resin film according to any one of claims 1 to 3, wherein the polypropylene-based resin composition constituting the base layer (A) includes two or more polypropylene homopolymers; a polypropylene homopolymer having the highest mesopentad fraction among the polypropylene homopolymers has a mesopentad fraction of 97.5% or more; and a polypropylene homopolymer having the lowest mesopentad fraction among the polypropylene homopolymers has a mesopentad fraction of 96.5% or less.

5. The biaxially oriented polypropylene-based resin film according to any one of claims 1 to 4, wherein the polypropylene-based resin composition constituting the base layer (A) includes at least one kind of polymer selected from the group consisting of propylene homopolymer, propylene-ethylene copolymer, propylene-butene-1 copolymer, propylene-ethylene-butene-1 copolymer, and propylene-pentene-1 copolymer.

6. The biaxially oriented polypropylene-based resin film according to any one of claims 1 to 5, having a Young's modulus in a longitudinal direction of 2.0 GPa or more, and a Young's modulus in a width direction of 4.0 GPa or more.

7. The biaxially oriented polypropylene-based resin film according to any one of claims 1 to 6, having a melt cut seal strength of 18 N/15mm or more.

8. The biaxially oriented polypropylene-based resin film according to any one of claims 1 to 7, having a heat seal attainable strength of 3 N/15mm or more.

9. A package comprising the biaxially oriented polypropylene-based resin film according to any one of claims 1 to 8.
